Europäisches Patentamt

European Patent Office

Office européen des brevets

(19)

(11) Veröffentlichungsnummer: **0 066 599**
**B1**

(12) # EUROPÄISCHE PATENTSCHRIFT

(45) Veröffentlichungstag der Patentschrift:
24.10.84

(51) Int. Cl.³: **G 03 B 29/00, G 08 B 15/00**

(21) Anmeldenummer: **82900098.3**

(22) Anmeldetag: **05.12.81**

(86) Internationale Anmeldenummer:
**PCT/EP 81/00190**

(87) Internationale Veröffentlichungsnummer:
**WO 82/02099 (24.06.82 Gazette 82/16)**

(54) **FOTOGRAFISCHE RAUMÜBERWACHUNGSEINRICHTUNG IN PERSONENKRAFTWAGEN.**

Verbunden mit 81110779.6/54977 (europäische Anmeldenummer/Veröffentlichungsnummer) durch Entscheidung vom 23.02.83.

(30) Priorität: **15.12.80 DE 8033306 U**

(43) Veröffentlichungstag der Anmeldung:
**15.12.82 Patentblatt 82/50**

(45) Bekanntmachung des Hinweises auf die Patenterteilung:
**24.10.84 Patentblatt 84/43**

(84) Benannte Vertragsstaaten:
**AT CH DE FR GB IT LI NL SE**

(56) Entgegenhaltungen:
**DE - B - 1 167 575**
**DE - B - 1 167 575**
**US - A - 3 349 679**
**US - A - 3 349 679**
**US - A - 3 752 047**
**US - A - 3 752 047**

(73) Patentinhaber: **Röhm GmbH, Kirschenallee Postfach 4242, D-6100 Darmstadt 1 (DE)**

(72) Erfinder: **MOSKOVITS, Francisc, Atzelbergstrasse 9, D-6000 Frankfurt/M (DE)**

## Beschreibung

Die Erfindung betrifft eine fotografische Raumüberwachungseinrichtung in Personenkraftwagen und anderen zu sichernden Räumen mit einer Sicherungsvorrichtung gegen Fremdeingriff mit einem Gehäuse und mit einer fotografischen Aufnahmeeinrichtung.

Aus der US-PS Nr. 3349679 ist eine solche fotografische Überwachungseinrichtung bekannt. Die bekannte Raumüberwachungseinrichtung enthält eine Spezialkamera, welche in einem abschliessbaren Gehäuse an der Decke eines Pkw's angeordnet ist. Des weiteren ist eine Blitzvorrichtung vorgesehen, um das Autoinnere auszuleuchten. Die Überwachungseinrichtung enthält einen Steuerkreis zur Betätigung der Kamera, welcher durch das Öffnen und Schliessen der Pkw-Türen eingeschaltet wird. Die Steuerschaltung wird beim Öffnen der Pkw-Tür vorbereitet und beim Schliessen derselben wirksam. Im Bedarfsfall wird eine Verzögerungsschaltung wirksam, die nach einer vorgegebenen Zeit nach Schliessen der Tür die Kamera und Blitzlichtvorrichtung auslöst. Bei diesen Kameras handelt es sich um komplizierte Spezialkameras, die als Antriebsvorrichtung einen Federmotor aufweisen, der mittels einer von aussen zugänglichen Handhabe aufziehbar ist. Demgegenüber liegt der Erfindung die Aufgabe zugrunde, eine fotografische Raumüberwachungseinrichtung der eingangs genannten Art zu schaffen, die einfach aufgebaut ist, sicher verriegelbar sein soll und bei der keine von aussen zugänglichen Handhaben vorgesehen sein sollen. Die Raumüberwachungseinrichtung soll bei geringem Aufwand preiswert herstellbar sein.

Die Erfindung macht von einer an sich bekannten handelsüblichen Kamera mit Motorantrieb Gebrauch. Sie ist durch die in Anspruch 1 angeführten Merkmale gekennzeichnet.

Hierdurch ist der Vorteil gegeben, dass mit Hilfe eines ausserhalb des Gehäuses vorgesehen Schalters der Stromkreis für den Kameramotor in einfacher Weise schliessbar ist, wodurch zumindest eine Aufnahme getätigt wird. Da bei geschlossenem Gehäuse der Auslöser durch ein Betätigungselement in seiner betätigten Stellung gehalten wird, sind in vorteilhafter Weise keine von aussen zu betätigenden mechanischen Mittel notwendig. Bei auf Serienbetrieb geschalteter fotografischer Kamera können beliebig viele Aufnahmen gemacht werden, und zwar in Abhängigkeit von der Betätigungsdauer des externen Schalters.

Gemäss weiterer Ausbildung ist in der Gehäusefrontseite ein Weitwinkelobjektiv, insbesondere ein sogenannter Türspion angeordnet. Dieser Türspion fluchtet mit dem Strahlengang des Objektivs der eingesetzten Motorkamera. Gemäss weiterer Ausgestaltung ist das Betätigungselement in Gehäuseoberteil vorgesehen. Hieraus ergibt sich der Vorteil, dass beim Aufsetzen des Gehäuseoberteils auf das Gehäuseunterteil das Betätigungselement zwangsläufig in seine Arbeitsstellung überführt wird und hierbei der Kameraauslöser in die Arbeitsstellung gebracht wird.

Gemäss weiterer Ausgestaltung ist das Betätigungselement beweglich angeordnet, wobei am Betätigungselement eine Betätigungsfeder angreift. In vorteilhafter Weise wird mit Hilfe der Betätigungsfeder der Kameraauslöser in seine Arbeitsstellung überführt, da die Kraft der Betätigungsfeder zumindest gleich der Auslösekraft des Kameraauslösers ist. Hierdurch ergibt sich in der Anwendung und im Zusammenhang mit einer Kamera und mit einer ausserhalb des Gehäuses befindlichen Batterie die Möglichkeit, im Kamerabatterieraum einen Anschlussadapter mit zwei nach aussen geführten Anschlussleitungen vorzusehen.

Wird eine Motorkamera mit innerhalb des Kameragehäuses befindlicher Batterie verwendet, so wird zwischen der Stirnseite der Batterie und dem zugeordneten Kontaktelement ein scheibenartiges Zwischenteil vorgesehen, das aus einem Isoliermittelteil und zwei beidseitig angeordneten leitenden Belägen oder Schichten versehen ist, wobei von den leitenden Belägen oder Schichten jeweils eine Anschlussleitung nach aussen geführt ist. Hierdurch ergibt sich der weitere Vorteil, dass ohne mechanischen Eingriff in den Aufbau bzw. die Konstruktion der Kamera eine externe Ein- und Ausschaltung des Kamerastromkreises möglich ist.

Zusätzlich kann innerhalb des Gehäuses eine Timer-Schaltung, vorzugsweise ein monostabiler Multivibrator mit mittels einer Handhabe vorwählbarer Zeitkonstante vorgesehen sein, durch welche ein Relais beeinflussbar ist, durch dessen Kontakt die kameraseitigen elektrischen Teile be- und entstrombar sind, wobei vom Eingang der Timer-Schaltung, vorzugsweise über eine Stecker-Kupplungs-Verbindung zumindest eine zweiradige Leitung zu einer extern angeordneten Signaltaste führt.

Bei Verwendung einer Kamera, bei der auf der Gehäuseoberseite neben dem Auslöser eine zwei Arbeitsstellungen aufweisende Drucktaste für Serienaufnahmen vorgesehen ist, ist gemäss einer anderen, besonders vorteilhaften Ausgestaltung ein Betätigungselement vorgesehen, das in einer gehäusefesten Halterung beweglich gelagert ist, wobei am Betätigungselement eine Feder angreift, gegen deren Kraft das Betätigungselement wegbewegbar ist und wobei die Kraft der Feder einen Mindestwert aufweist. Hierdurch wird in vorteilhafter Weise erreicht, dass beim Einfügen der Kamera in die Halterung zunächst das Betätigungselement entgegen der Federkraft wegbewegt wird und dann mit der Seriendrucktaste in Berührung kommt. Die Seriendrucktaste wird mit Hilfe des Betätigungselementes nach unten bewegt und entriegelt. Beim weiteren Einfügen der Kamera in die Halterung wird die Seriendrucktaste durch das Betätigungselement freigegeben. Sie bewegt sich nach oben in ihre Serienaufnahmen ermöglichende Arbeitsstellung. Sodann kommt beim weiteren Einfügen der Kamera in die Halterung das Betätigungselement mit dem Kameraauslöser in Wirkverbindung. Der Kameraauslöser wird mit Hilfe des Betätigungselementes in seine Arbeitsstellung überführt. Ist also die Kamera in die Halterung eingebracht, so sind sowohl die Serientaste als auch der Auslöser zwangsläufig in ihre Arbeitsstellung überführt worden. Gemäss weiterer Ausbildung weist das Betätigungselement eine Steuer- bzw. Aufläufschräge auf.

Gemäss einer vorteilhaften Ausgestaltung weisen die beiden Gehäuseteile im Bereich ihrer Überlappungen miteinander fluchtende Ausnehmungen zur Aufnahme je eines Steckschlosses auf.

In vorteilhafter Weise ist die Gehäuseunterseite mit Bohrungen zur Aufnahme von Befestigungselementen versehen. Gemäss weiterer Ausbildung weist die Gehäusefrontseite einen Fensterbereich auf. Dieser Fensterbereich ist an die Grösse des eingebauten oder ansetzbaren Blitzgerätes angepasst.

Gemäss einer anderen vorteilhaften Ausgestaltung ist das Befestigungselement ein Gewindeteil, das auf einem Bügel der Kamerahalterung vorgesehen ist. Dieser Bügel mit Befestigungselement dient gleichzeitig zur Lagefixierung der Kamera in der Halterung.

Im folgenden wird die Erfindung anhand eines in den Fig. 1 bis 5 dargestellten Ausführungsbeispieles beschrieben. Es zeigen:

Fig. 1 in schematischer Darstellung eine fotografische Raumüberwachungseinrichtung im Bereich der Frontscheibe eines Pkw's,

Fig. 2 und 2a eine Explosionsdarstellung der fotografischen Raumüberwachungseinrichtung,

Fig. 3 eine perspektivische Explosionsdarstellung des Gehäuseunterteiles der fotografischen Raumüberwachungseinrichtung mit den auf ihm vorgesehenen Teilen,

Fig. 4 eine perspektivische, schematische Darstellung einer Zeitschaltung, und

Fig. 5 einen Querschnitt durch eine Halterung für eine mit einer Seriendrucktaste versehene Motorkamera.

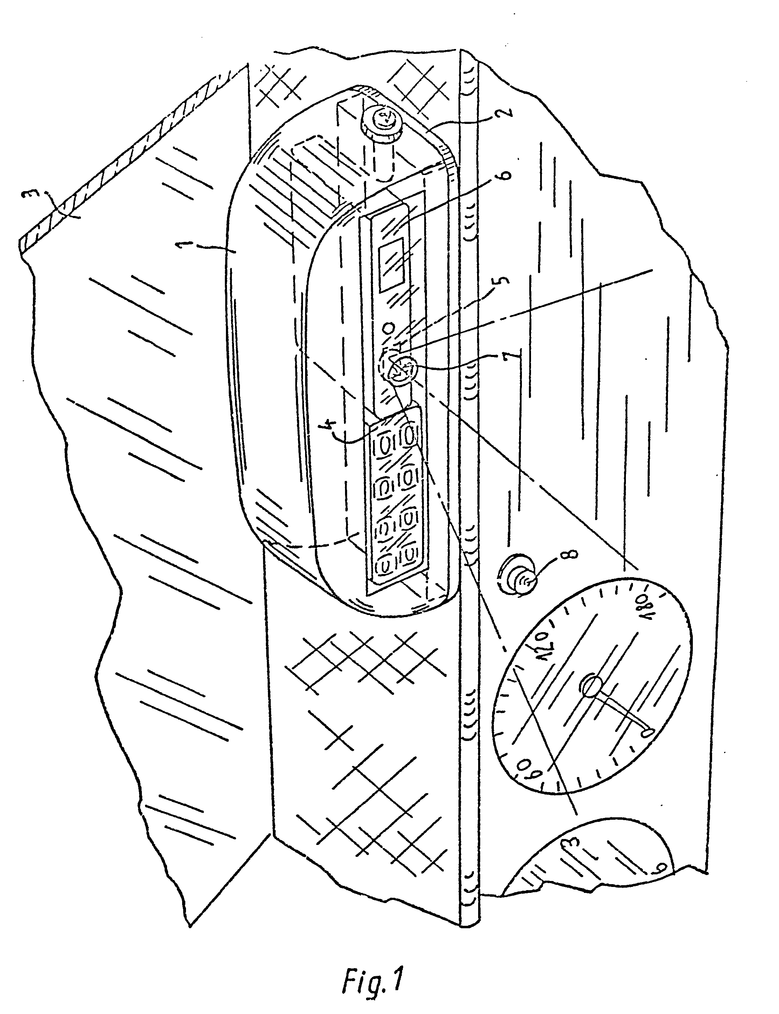

Gemäss Fig. 1 ist ein zweiteiliges Kunststoffgehäuse 1 und 2 im Inneren eines Pkw's unmittelbar hinter der Frontscheibe 3 angeordnet. Auf der Stirnseite des Gehäuseoberteils 1 ist ein in etwa rechteckförmiger Fensterbereich 4 vorgesehen, welcher lichtdurchlässig ausgebildet ist. Fluchtend mit der optischen Achse des Objektives 5 einer Kamera 6 ist ein sogenannter Türspion 7 als Weitwinkelobjektiv vorgesehen. Mit 8 ist eine Alarmtaste bezeichnet.

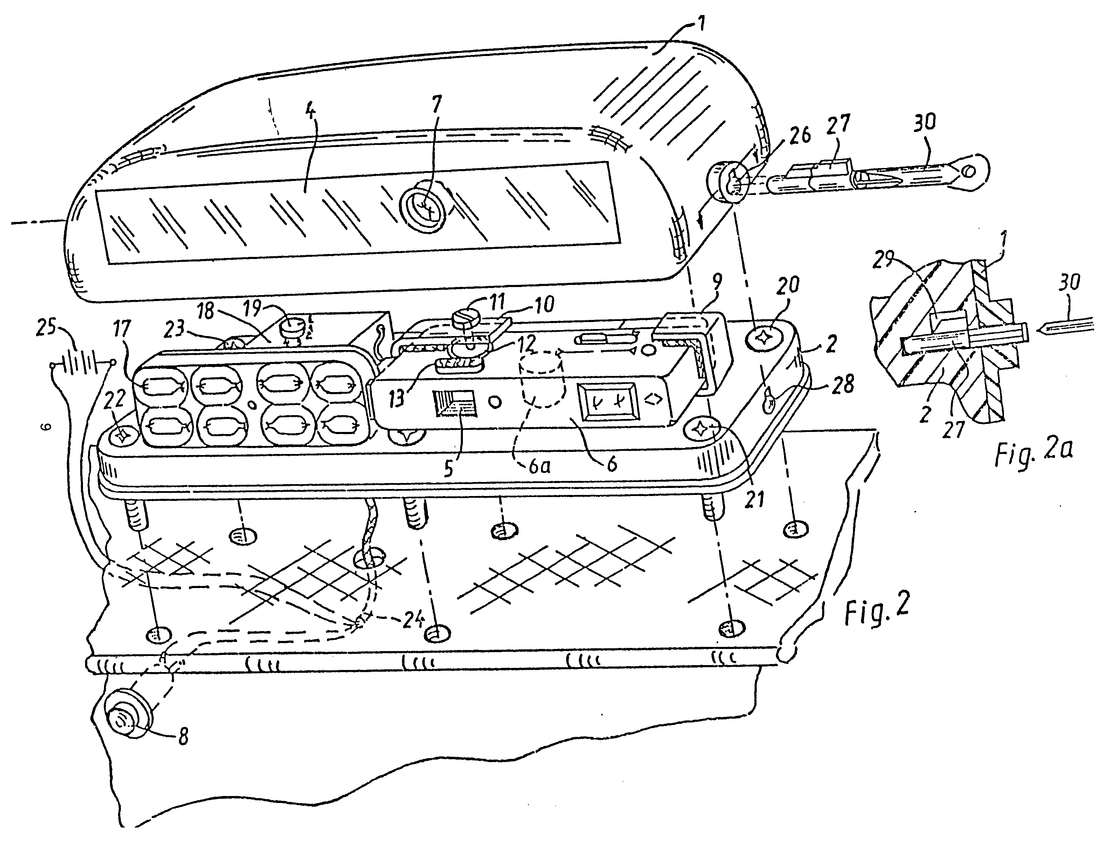

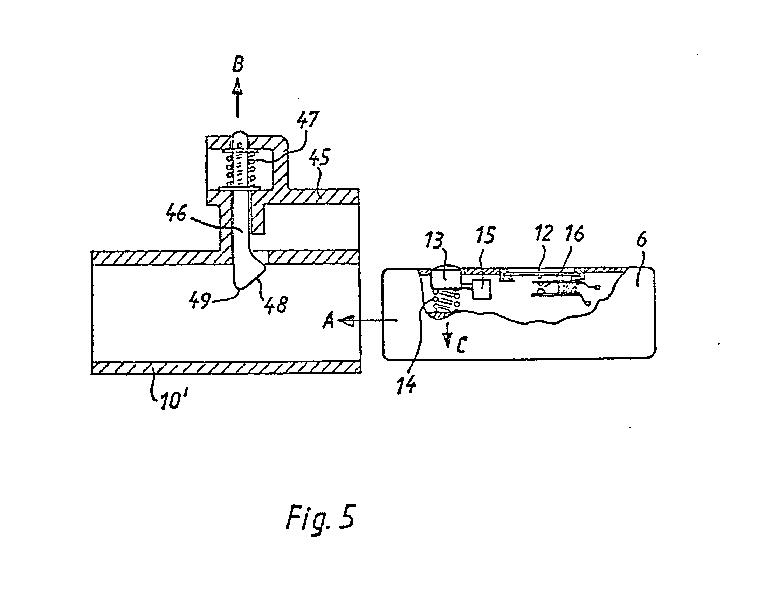

In Fig. 2 sind die den Teilen gemäss Fig. 1 entsprechenden Teile mit gleichen Bezugszeichen versehen. Die fotografische Kamera 6 wird durch auf dem Gehäuseunterteil 2 vorgesehene Halterungen 9 und 10 gehalten. Mit 11 ist eine Stellschraube bezeichnet, die bei in die Halterungen 9 und 10 eingebrachter Kamera 6 in ihre Arbeitsstellung überführt wird und hierbei den mit 12 bezeichneten Auslöser betätigt. In nicht dargestellter Weise ist innerhalb der fotografischen Kamera 6 ein Elektromotor vorgesehen, durch den einerseits der Film weitertransportierbar ist und durch den andererseits nach jeder Aufnahme der Verschluss erneut gespannt wird. Mit 13 ist eine Serientaste bezeichnet, die zwei Arbeitsstellungen aufweist. In der gedrückten Stellung können mit Hilfe der fotografischen Kamera Einzelaufnahmen durchgeführt werden. Bei nach oben ausgerückter Serientaste 13 befindet sich diese in der zweiten Arbeitsstellung für Serienbildaufnahmen. Die Serientaste 13 wird aus ihrer ersten Arbeitsstellung in die zweite (ausgerückte Arbeitsstellung) durch einfaches Drücken überführt. Hierbei wird die Serientaste entrastet und kann sich mit Hilfe einer an ihr angreifenden Feder in die ausgerückte Stellung bewegen. Gemäss Fig. 5 greift an der Serientaste 13 eine Druckfeder 14 an. Die Serientaste ist mit einem Rastelement 15 verbunden. Unterhalb des Membranauslösers 12 befindet sich ein Schalter 16.

Auf die Kamera ist eine Blitzlampenanordnung 17 aufgesteckt. Mit 18 ist eine Timer-Relais-Schaltung bezeichnet, deren Zeitwirkung durch eine Handhabe 19 einstellbar ist.

Mit 20, 21, 22, 23 sind Schrauben bezeichnet, mit deren Hilfe das Gehäuseunterteil mit dem Gehäuse des Pkw's verbunden wird.

Vom Alarmdruckschalter 8 führt eine elektrische Leitung 24 zum Gehäuseinneren. Desgleichen führt eine Leitung von der Autobatterie 25 in das Innere des Gehäuses 1, 2.

Das Gehäuseoberteil ist an den sich gegenüberliegenden Schmalseiten mit einer Öffnung 26 für ein Steckschloss 27 versehen. Am Gehäuseunterteil ist an den entsprechenden Stellen eine zugeordnete Öffnung 28 vorhanden. Diese weist eine Hinterdrehung 29 auf, um eine sichere Verriegelung des Steckschlosses zu ermöglichen. Mit 30 ist der zugeordnete Steckschlüssel bezeichnet.

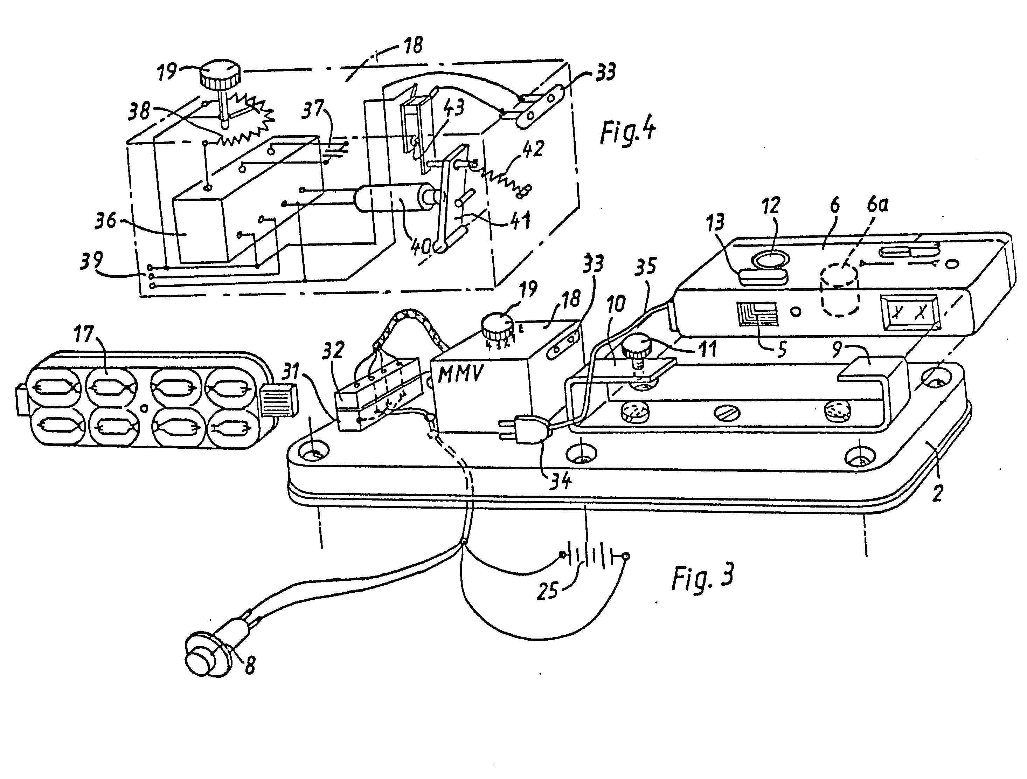

In Fig. 3 sind die den Teilen gemäss Fig. 1 und 2 entsprechenden Teile mit gleichen Bezugszeichen versehen.

Auf dem Gehäuseunterteil 2 ist eine Steckverbindung 31, 32 vorgesehen, die den Alarmschalter 8 und die Batterie 25 mit der sogenannten Timer-Auslöseschaltung 18 verbindet. Diese Timer-Schaltung 18 weist eine Anschlussfassung 33 für einen Stecker 34 auf, von dem eine Leitung 35 zur Kamera 6 führt.

Gemäss Fig. 4 besteht die Timer-Schaltung 18 aus einem monostabilen Multivibrator 36, dessen zeitbestimmendes Glied einen Kondensator 37 und einen veränderbaren Widerstand 38 aufweist. Der Widerstand 38 ist mit Hilfe der Drehknopfhandhabe 19 veränderbar. Der mit 39 bezeichnete Steuereingang des Multivibrators 36 ist mit dem Alarmschalter 8 verbindbar. Vom Ausgang des Multivibrators führen zwei Leitungen zu der Spule 40 eines Relais, dessen Anker 41 unter der Wirkung einer Feder 42 steht und mit dessen Hilfe ein Schalter 43 betätigbar ist. Mit Hilfe des Schalters 43 ist der Minuspol der Batterie 25 mit einem Anschluss der Steckerfassung 33 verbindbar. Der andere Anschluss der Steckerfassung 33 ist direkt mit dem Pluspol der Batterie 25 verbunden.

Bei Betätigung der Alarmtaste 8 erhält der monostabile Multivibrator 36 einen Steuerimpuls, der die Bestromung des Relais 40 veranlasst und damit die Schliessung des Schalters 43. Während einer vorgegebenen Zeitdauer, die abhängig ist von der Stellung des Drehknopfes 19, bleibt das Relais 40 bestromt und damit der Schalter 43 geschlossen. Während dieser Zeit ist der nicht dargestellte Motor in der Kamera 6 bestromt und veranlasst die Durchführung einer vorgesehenen Anzahl von Aufnahmen.

Bei in die Fassung bzw. Halterung 6 und 10 eingeschobener Kamera 6 ist eine mit 11 bezeichnete Betätigungsschraube so weit nach unten geschraubt, dass sich der Kameraauslöser 12 in der gedrückten Stellung befindet. Auf diese Weise kann der Verschluss der Kamera allein durch das Betätigen der Alarmtaste 8 mit Hilfe des eingebauten Motors beliebig oft betätigt werden, ohne dass hierbei nach aussen geführte mechanische Betätigungsmittel erforderlich sind.

Anstelle der in Fig. 3 gezeigten Betätigungsschraube 11 ist eine Betätigungsvorrichtung gemäss Fig. 5 möglich, die den besonderen Vorteil aufweist, dass beim Einschieben bzw. Einfügen der Kamera in die Halterungen 9 und 10 die Serientaste 13 und der Auslöser 12 automatisch betätigt werden.

Die mit 10' bezeichnete Halterung weist einen bügelartigen Aufsatz 45 auf, in dem ein Betätigungselement 46 beweglich gelagert ist. Dieser Betätigungsstift 46 steht unter der Wirkung einer Feder 47, deren Kraft grösser ist als die Kraft der Feder 14 der Serientaste 13 und grösser als die Betätigungskraft des Auslösers 12. Dieser Betätigungsstift 46 weist eine Steuerschräge 48 auf, die so geneigt ist, dass der Stift 46 beim Einschieben der Kamera in Pfeilrichtung A in die Halterung 10' mühelos in Pfeilrichtung B bewegbar ist. Der Betätigungsstift 46 weist benachbart zur Steuerschräge 48 einen gerundeten Betätigungsbereich 49 auf.

Beim Einschieben der Kamera 6 in die Halterung 10' wird durch die Stirnkante der Kamera über die Steuerschräge 48 der Betätigungsstift 46 in Pfeilrichtung B bewegt. Beim weiteren Einschieben gelangt der Kopf 49 des Betätigungsstifte 46 in Wirkverbindung mit der Serientaste 13 und drückt diese in Pfeilrichtung C. Hierbei wird die Serientaste 13 über das Teil 15 entriegelt bzw. entkuppelt. Beim weiteren Einschieben der Kamera wird die Wirkverbindung zwischen Betätigungsstift 46 und Serientaste 13 aufgehoben, so dass diese unter der Wirkung ihrer Feder 14 sich entgegen der Pfeilrichtung C in die Arbeitsstellung für Serienaufnahmen bewegt.

Sodann gelangt beim weiteren Einschieben der Kamera der Betätigungsstift 46 mit seinem Betätigungskopf 49 in Wirkverbindung mit dem Auslöser 12. Der Auslöser 12 wird betätigt und in seiner betätigten Stellung gehalten. Durch diese Massnahme wird zwangsläufig erreicht, dass die fotografische Kamera auf Serienbetrieb geschaltet wird und dass ausserdem mit Hilfe des gleichen Elementes der Auslöser in seine Arbeitsstellung überführt wird. Zum Herausnehmen der Kamera aus der Halterung 9, 10 wird diese in Pfeilrichtung A weitergeschoben.

## Patentansprüche

1. Fotografische Raumüberwachungseinrichtung in Personenkraftwagen und anderen zu sichernden Räumen mit einer Sicherungsvorrichtung gegen Fremdeingriff, mit einem Gehäuse und mit einer fotografischen Aufnahmeeinrichtung, dadurch gekennzeichnet, dass als Aufnahmeeinrichtung eine handelsübliche Kamera (6) mit Motorantrieb Verwendung findet, dass im Gehäuse (1, 2) ein Betätigungselement (44, 46) vorgesehen ist, durch das der Auslöser (12, 13) betätigt wird, und dass ein Schalter (8, 43) vorgesehen ist, der in den Motorstromkreis der Kamera (6) gelegt wird, und durch den die Kamera im Bedarfsfall ausgelöst werden kann.

2. Fotografische Raumüberwachungseinrichtung nach Anspruch 1, dadurch gekennzeichnet, dass in dem Gehäuse ein Weitwinkelobjektiv (7), insbesondere ein sogenannter Türspion angeordnet ist.

3. Fotografische Raumüberwachungseinrichtung nach einem der Ansprüche 1 oder 2, dadurch gekennzeichnet, dass das Betätigungselement im Gehäuseoberteil vorgesehen ist (Fig. 1).

4. Fotografische Raumüberwachungseinrichtung nach einem der vorhergehenden Ansprüche, dadurch gekennzeichnet, dass ein Betätigungselement (46) vorgesehen ist, das an einer gehäusefesten Halterung (45) beweglich gelagert ist, dass am Betätigungselement (46) eine Feder (47) angreift, gegen deren Kraft das Betätigungselement (46) beim Einschieben der Kamera wegbewegbar ist, und dass die Federkraft der Feder (47) grösser ist als die zum Betätigen des Auslösers (13, 12) erforderliche Kraft.

5. Fotografische Raumüberwachungseinrichtung nach Anspruch 4, dadurch gekennzeichnet, dass das Betätigungselement (46) mit einer Steuer- bzw. Auflaufschräge (48) versehen ist.

6. Fotografische Raumüberwachungseinrichtung nach einem der vorhergehenden Ansprüche, dadurch gekennzeichnet, dass die beiden Gehäuseteile (1, 2) im Bereich ihrer Überlappung miteinander fluchtende Ausnehmungen (26, 28) zur Aufnahme eines Steckschlosses (27) aufweisen.

7. Fotografische Raumüberwachungseinrichtung nach einem der vorhergehenden Ansprüche, dadurch gekennzeichnet, dass die Gehäuseunterseite (2) mit Bohrungen zur Aufnahme von Befestigungselementen (21) versehen ist.

8. Fotografische Raumüberwachungseinrichtung nach einem der Ansprüche 1 bis 3, dadurch gekennzeichnet, dass das Befestigungselement für die Kamera ein Gewindeteil (11) ist, das auf einem Bügel (10) der Kamerahalterung (9) vorgesehen ist und das gleichzeitig als Betätigungselement für den Auslöser (12) dient.

9. Fotografische Raumüberwachungseinrichtung nach Anspruch 1, dadurch gekennzeichnet, dass eine Timer-Schaltung (18) vorgesehen ist, die beim Auslösen des Alarmschalters (8) einen Auslöseschalter (43) in voreinstellbaren Zeitabständen schliesst.

## Claims

1. Photographic area monitoring device in passenger vehicles and other areas which are to be made safe, with a security device to prevent tampering, with a housing and with a photographic recording device, characterised in that the recording device used is a motor-driven standard commercial camera (6), in that an actuating element (44, 46) which actuates the trigger (12, 13) is provided in the housing (1, 2), and that a switch (8, 43) is provided which is placed in the motor circuit of the camera (6) and by means of which the camera can be triggered, if necessary.

2. Photographic area monitoring device as claimed in Claim 1, characterised in that a wide angle lens (7), particularly a so-called door spy hole is mounted in the housing.

3. Photographic area monitoring device as claimed in one of Claims 1 or 2, characterised in that the actuating element is provided in the upper part of the housing (Fig. 1).

4. Photographic area monitoring device as claimed in one of the preceding claims, characterised in that an actuating element (46) is provided which is movably mounted on a clamp (45) integral with the housing, in that a spring (47) acts on the actuating element (46) and in that the actuating element (46) can be moved away, counter to the force of said spring (47), when the camera is pushed in and the spring force of the spring (47) is greater than the force required to actuate the trigger (13, 12).

5. Photographic area monitoring device as claimed in Claim 4, characterised in that the actuating element (46) is provided with a control or stop slope (48).

6. Photographic area monitoring device as claimed in one of the preceding claims, characterised in that the two housing parts (1, 2) comprise, in the region of their overlap, recesses (26, 28) which are aligned with one another for receiving a plug-in lock (27).

7. Photographic area monitoring device as claimed in one of the preceding claims, characterised in that the underside (2) of the housing is provided with bores for receiving fixing members (21).

8. Photographic area monitoring device as claimed in one of Claims 1 to 3, characterised in that the fixing member for the camera is a threaded component (11) which is provided on a bracket (10) of the camera clamp (9) and which simultaneously serves as an actuating element for the trigger (12).

9. Photographic area monitoring device as claimed in Claim 1, characterised in that a timer circuit (18) is provided which closes a trigger switch (43) at presettable intervals of time on actuation of the alarm switch (8).

## Revendications

1. Système photographique de protection contre l'intrusion pour voitures particulières et autres espaces à mettre sous protection, comportant un dispositif de sécurité contre les interventions étrangères, une boîte et un dispositif de prises de vue photographiques, caractérisé en ce qu'il est fait usage, en tant qu'appareil de prises de vue, d'un appareil photographique du commerce à commande par moteur (6), en ce qu'il est prévu, dans la boîte (1, 2), un élément de commande (44, 46) par lequel le déclencheur (12, 13) est actionné, et en ce qu'il est prévu un interrupteur (8, 43) qui est intercalé dans le circuit du moteur de l'appareil photographique (6) et par lequel l'appareil photographique peut être déclenché en cas de besoin.

2. Système photographique de protection contre l'intrusion selon la revendication 1, caractérisé en ce qu'un objectif grand angulaire (7), en particulier du genre espion de porte, est monté dans la boîte.

3. Système photographique de protection contre l'intrusion selon l'une des revendications 1 ou 2, caractérisé en ce que l'élément de commande est prévu dans la partie supérieure de la boîte (fig. 1).

4. Système photographique de protection contre l'intrusion selon l'une des revendications 1 à 3, caractérisé en ce qu'il est prévu un élément de commande (46) qui est monté mobile sur un support (45) fixé à la boîte, en ce que, sur l'élément de commande (46), agit un ressort (47) contre la force duquel l'élément de commande (46) peut être écarté lors de l'insertion de l'appareil photographique, et en ce que la force élastique du ressort (47) est plus grande que la force nécessaire pour l'actionnement du déclencheur (13, 12).

5. Système photographique de protection contre l'intrusion selon la revendication 4, caractérisé en ce que l'élément de commande (46) comporte un biseau de commande ou de passage (48).

6. Système photographique de protection contre l'intrusion selon l'une des revendications 1 à 5, caractérisé en ce que les deux parties (1, 2) de la boîte présentent, dans la région de leur recouvrement, des évidements (26, 28) alignés mutuellement, destinés à recevoir une serrure enfichable (27).

7. Système photographique de protection contre l'intrusion selon l'une des revendications 1 à 6, caractérisé en ce que le côté inférieur (2) de la boîte présente des forures destinées à recevoir des éléments de fixation (21).

8. Système photographique de protection contre l'intrusion selon l'une des revendications 1 à 3, caractérisé en ce que l'élément de commande pour l'appareil photographique est une pièce filetée (11) qui est prévue sur un étrier (10) du support d'appareil photographique (9) et qui sert en même temps d'élément de commande pour le déclencheur (12).

9. Système photographique de protection contre l'intrusion selon la revendication 1, caractérisé en ce qu'un circuit minuteur (18) est prévu pour fermer à intervalles préréglables un interrupteur de déclenchement (43) en cas de déclenchement de l'interrupteur d'alarme (8).

*Fig. 1*

7

Fig. 2a

Fig. 2

Fig.4

Fig. 3

MMV

*Fig. 5*